Europäisches Patentamt

European Patent Office

Office européen des brevets

(11) Veröffentlichungsnummer : **0 018 587**
**B1**

(12) # EUROPÄISCHE PATENTSCHRIFT

(45) Veröffentlichungstag der Patentschrift :
15.12.82

(21) Anmeldenummer : 80102183.3

(22) Anmeldetag : 23.04.80

(51) Int. Cl.³ : **C 08 L 23/00, C 08 L 51/06,
C 08 L 97/02, C 08 K 3/26,
C 08 K 9/04**

(54) **Holzmehlgefüllte thermoplastische Polyolefin-Formmassen mit verbesserten Verarbeitungseigenschaften und ihre Verwendung zur Herstellung geformter Teile.**

(30) Priorität : 25.04.79 DE 2916657

(43) Veröffentlichungstag der Anmeldung :
12.11.80 (Patentblatt 80/23)

(45) Bekanntmachung des Hinweises auf die Patenterteilung : 15.12.82 Patentblatt 82/50

(84) Benannte Vertragsstaaten :
BE DE FR GB IT

(56) Entgegenhaltungen :
DE A 1 469 886
DE B 1 241 981
FR A 2 253 784
FR A 2 381 804

(73) Patentinhaber : BASF Aktiengesellschaft
Carl-Bosch-Strasse 38
D-6700 Ludwigshafen (DE)

(72) Erfinder : Theysohn, Rainer, Dr.
Bruesseler Ring 38
D-6700 Ludwigshafen (DE)
Erfinder : Seiler, Erhard, Dr.
Erpolzheimer Strasse 1
D-6700 Ludwigshafen (DE)
Erfinder : Welz, Martin
Kaiserslauterer Strasse 231
D-6702 Bad Duerkheim 3 (DE)

Holzmehlgefüllte thermoplastische Polyolefin-Formmassen mit verbesserten Verarbeitungseigenschaften und ihre Verwendung zur Herstellung geformter Teile

Die Erfindung betrifft Formmassen, die bestehen aus einem homogenen Gemisch aus Holzteilchen, thermoplastischen Kunststoff und einem Verarbeitungsstabilisator.

Mit Holzmehl gefüllte thermoplastische Formmassen sind wegen ihres günstigen Preises, bezogen auf das Volumen der Formmassen, im Vergleich zu beispielsweise mit ausschließlich mineralischen Füllstoffen gefüllten Thermoplasten von Interesse. Durch den Füllstoff Holzmehl wird die Steifigkeit und die Wärmeformbeständigkeit solcher Formmassen durchweg erhöht, was vor allem für den Einsatz im Kraftfahrzeugsektor wünschenswert ist. Zur Einarbeitung des Holzmehls in Thermoplaste und zur Verarbeitung der gefüllten Formmassen zum Beispiel durch Spritzguß oder durch Extrusion sind gewöhnlich Temperaturen erforderlich, bei denen der Zersetzungspunkt des Holzes, der bei ca. 180 °C liegt, zumindest kurzzeitig überschritten wird. Als Folge davon können einmal saure Pyrolyseprodukte des Holzes, wie Essigsäure, frei werden, die zu Korrosionserscheinungen an den Verarbeitungsmaschinen führen, zum anderen können teerähnliche Produkte ausschwitzen, die in kurzer Zeit zu festhaftenden Belägen z.B. an Spritzgußformen oder Kalanderwalzen führen. Die teerartigen Krackprodukte können z.T. auch in der Formmasse verbleiben und dort zu unerwünschten dunklen Schmutzpunkten führen. Bei Massetemperaturen > 220 °C kann es bei längeren Verweilzeiten zur Entstehung gasförmiger Zersetzungsprodukte des Holzes kommen, was einmal zum explosionsartigen Verspritzen von Schmelze führen kann und zum anderen meistens zu Blasen und Lunkern im Fertigteil führt. Bezüglich der Verarbeitungstemperatur und der Verweilzeit bei höheren Temperaturen ist man daher, oftmals erheblichen Beschränkungen unterworfen, die in bestimmten Fällen eine Verwendung solcher preisgünstiger Formmassen ausschließen.

Es hat daher nicht an Versuchen gefehlt, durch Zugabe spezieller Verbindungen diese nachteiligen Effekte, z.B. das Entstehen von sauren Pyrolyseprodukten zu reduzieren oder gänzlich auszuschalten. So wird in der DE-B 25 30 307 ein Verfahren beschrieben, bei dem holzmehlgefüllte Thermoplasten mit einer Kombination aus Polymerstabilisator, gängigen Gleitmitteln und Harnstoff ausgerüstet werden, um eine einwandfreie Verarbeitung zu erzielen. Wie sich bei einer Vielzahl von holzmehlgefüllten Thermoplasten unterschiedlichen Typs gezeigt hat, ist die bekannte Kombination zwar in der Lage, Korrosionsschäden durch saure Pyrolyseprodukte in gewissem Umfang zu reduzieren, ein positiver Einfluß auf teerartige Ablagerungen in der Formmasse oder an den Verarbeitungswerkzeugen, die längerfristig zu Verklebungen und Entformungsschwierigkeiten führen, sowie eine temperaturmäßig erweiterte Verarbeitungsbreite war jedoch nicht feststellbar.

In der DE-A 27 57 258 ist ein Verfahren beschrieben, mit dem es gelingt, mit Hilfe von Magnesiumoxid sowohl Korrosionserscheinungen als auch harzige Belagbildungen auf Verarbeitungsmaschinen erheblich zu reduzieren. Bei Massetemperaturen über 230 °C ist allerdings auch hier mit einem Auftreten von gasförmigen Zersetzungsprodukten zu rechnen.

Der vorliegenden Erfindung lag daher die Aufgabe zugrunde, einen kostengünstigen Verarbeitungsstabilisator zu finden, der sowohl die Menge an korrosiven als auch teerartigen Pyrolyseprodukten erheblich reduziert und zudem einen wünschenswerten breiteren Temperaturbereich bei der gefahrlosen und einandfreien Verarbeitung holzmehlgefüllter Polyolefin-Formmassen zuläßt.

Diese Aufgabe wurde erfindungsgemäß gelöst durch Formmassen, bestehend aus einem homogenen Gemisch aus :

a) 100 Gewichtsteilen Holzteilchen mit Teilchengrößen von 10 bis 4 000 μm ;

b) 60 bis 400 Gewichtsteilen eines thermoplastischen Olefinpolymerisates mit einem Schmelzindex zwischen 0,1 und 20 g/10 min und einer Dichte zwischen 0,890 und 0,965 g/cm$^3$ ;

c) 20 bis 100 Gewichtsteilen eines Calciumcarbonats mit einem Teilchengrößenbereich von 0,01 bis 10 μm, wobei das Calciumcarbonat an der Oberfläche eine festhaftende Schicht aus langkettigen $C_{10}$- bis $C_{40}$- Fettsäuren in Mengen von 0,1 bis 4,0 Gewichtsprozent, bezogen auf das Calcium-carbonat, enthält sowie gegebenenfalls

d) üblichen Zusätzen in üblichen Mengen.

Der Feuchtigkeitsgehalt der Holzteilchen (a) liegt vorzugsweise unter 5 Gewichtsprozent.

Die Mischungskomponente (b) kann z.B. aus Carboxylgruppen enthaltenden Olefinpolymerisaten bestehen, bei (c) ist die langkettige Fettsäure bevorzugt Stearinsäure.

Unter Formmassen werden ungeformte und vorgeformte Stoffe verstanden, die nach bekannten Verfahren durch spanloses Formen innerhalb bestimmter Temperaturbereiche zu geformten Formteilen verarbeitet werden können. Die Formmassen können griesförmig oder als Granulat vorliegen, vielfach sind sie auch als plattenförmiges Halbzeug vorgeformt. Im vorliegenden Fall stellen die Formmassen innig vermischte, gleichmäßige Gemische aus Holzteilchen, Thermoplasten, Calciumcarbonat und gegebenenfalls üblichen Zusatzstoffen dar.

Die Holzteilchen (a) sind in den erfindungsgemäßen Formmassen mit 100 Gewichtsteilen enthalten. Für die erfindungsgemäßen Formmassen geeignetes feinteiliges Holz ist das einschlägig übliche, insbesondere Holz in Form von Spänen, Fasern oder Mehl. Als Holzteilchen kommen alle marktgängigen Typen in einem Bereich von 10 bis 4 000 μm Länge und 10 bis 1 000 μm Dicke, vorzugsweise 50 bis 1 000 μm Länge und 20 bis 500 μm Dicke in Betracht. Das Material kann sowohl aus Hartholz wie Buche,

**0 018 587**

Eiche etc. aber auch auf Basis von weichen Hölzern wie Fichte, Tanne, Kiefer, Pappel etc. bestehen. Die Holzmehle können sowohl in Pulverform als auch kompaktiert eingesetzt werden, sie können zudem oberflächenbehandelt sein im Hinblick auf eine zusätzliche bessere Verarbeitbarkeit und eine bessere Haftung gegenüber dem Polymerisat. Der Feuchtigkeitsgrad des Holzes liegt zweckmäßig unter 10, bevorzugt bei 0,5 bis unter 5 Gewichtsprozent.

Als Olefinpolymerisat (b), das in der Mischung mit 60 bis 400, bevorzugt 100 bis 300 Gewichtsteilen eingesetzt ist, kommen die einschlägig bekannten Olefinpolymerisate in Betracht. Die verwendeten Olefinpolymerisate sind charakterisiert durch einen Schmelzindex zwischen 0,1 und 20, bevorzugt 0,2 und 15 g/10 min gemessen nach ASTM D 1238-65 T bei einer Temperatur von 190 °C und einem Auflagegewicht von 2,16 kg bei Äthylenpolymerisaten bzw. 230 °C und 2,16 kg bei Propylenpolymerisaten und eine Dichte zwischen 0,890 und 0,965 g/cm$^3$, gemessen nach DIN 53 479. Als Olefinpolymerisate bevorzugt sind die Homopolymerisate des Äthylens und des Propylens, Äthylen-Propylen-Copolymerisate sowohl als Blockcopolymerisate als auch statistische Polymerisate sowie Copolymerisate des Äthylens mit $C_1$- bis $C_4$-Acrylsäureestern oder $C_2$- bis $C_4$-Alkancarbonsäurevinylestern, wobei hier mindestens 50 Gewichtsprozent Äthylen einpolymerisiert sind, sowie Mischungen aus den aufgeführten Polymerisaten. In Frage kommen zudem Mischungen von teilkristallinem Polypropylen mit Styrol-Butadien- oder Styrol-Isopren-Blockcopolymerisaten. Die genannten Polymerisate sind aus der Polymerchemie wohlbekannt, so daß an dieser Stelle nicht näher darauf eingegangen zu werden braucht. Die Polymerisate sind thermoplastisch, d.h. sie werden bei Erhöhung der Temperatur nach Überschreitung ihres Erweichungs- bzw. Schmelzpunktes weich und erhärten bei Abkühlung wieder.

Unter den gegebenenfalls zu verwendenden Carboxylgruppen enthaltenden Olefinpolymerisaten sind vor allem Pfropfpolymerisate von monoäthylenisch ungesättigten Carbonsäuren auf Polyolefine zu verstehen, die in den DE-A 26 58 810 und 21 08 749 beschrieben sind.

Als Calciumcarbonat sind sowohl natürliche als auch synthetische Qualitäten vom Calzit-Typ geeignet, sofern sie eine mittlere Korngröße von 10 μm nicht überschreiten. Geeignet ist ein Korngrößenbereich von 0,01 bis 10,0 μm, insbesondere 0,1 bis 5,0 μm. Ein Merkmal des eingesetzten Calciumcarbonates ist das Vorliegen einer festhaftenden Schicht aus langkettigen organischen $C_{10}$- bis $C_{40}$-Fettsäuren, wie vorzugsweise Stearinsäure, auf der Partikeloberfläche des Calciumcarbonates, wobei der Anteil der Fettsäuren, bezogen auf Calciumcarbonat, im Bereich von 0,1 bis 4,0 Gewichtsprozent liegen soll.

Die Formmassen können neben den aufgeführten Hauptkomponenten (a), (b), (c) noch die üblichen Zusätze (d) wie Verarbeitungshilfsmittel, Polymerstabilisatoren, andere Korrosionsinhibitoren, Farbstoffe, Flammschutzmittel und gegebenenfalls Treibmittel in üblichen Mengen enthalten.

Die Herstellung der erfindungsgemäßen Formmassen kann mit den üblichen Knet- und Mischvorrichtungen erfolgen. So ist es z.B. möglich, das Holzmehl mit feinteiligem Polymerisat und beschichtetem Calciumcarbonat in einem Taumelmischer bei Raumtemperatur zu mischen und diese Mischung direkt einer weiteren Verarbeitung auf dem Spritzgußsektor oder dem Extrusionssektor zuzuführen. Eine andere Ausführungsform besteht darin, das homogene Gemisch vor der Weiterverarbeitung mechanisch in marktgängigen Kompaktier-vorrichtungen gezielt zu verdichten.

Eine weitere Ausführungsform besteht darin, das homogene Gemisch auf Temperaturen im Bereich der Schmelztemperatur der eingesetzten Thermoplastkomponente zu bringen und damit ein Aufsintern des Holzmehls und des Calciumcarbonats auf die betreffende feinteilige Polymerphase zu bewirken. Ferner ist es möglich, die Komponenten getrennt oder in einem groben Gemisch in einen Extruder, gegebenenfalls mit Entgasungsvorrichtung, zu geben und dort bei Temperaturen oberhalb der Schmelztemperatur des thermoplastischen Kunststoffmaterials homogen zu vermischen. Die schmelzflüssigen Mischungen können dann direkt durch Extrusionsverfahren zu geformten Formteilen wie dicken Folien, Platten, Profilen etc. weiterverarbeitet werden, sie können aber auch durch Düsen als Strang ausgetragen, abgekühlt und zu Granulaten geschnitten werden, die z.B. im Spritzguß zu Formteilen weiterverarbeitet werden können.

Die Formmassen eignen sich insbesondere für den Spritzguß und die Extrusion. Sie zeichnen sich durch eine deutlich nach höheren Temperaturen verschobene Verarbeitungsbreite aus als entsprechende Formmassen ohne Calciumcarbonatanteil, was sich vor allen Dingen durch eine geringere Entstehung von Holzpyrolysaten und durch eine erheblich reduzierte Verfärbung bei Verarbeitungstemperaturen über 220 °C bemerkbar macht. Der Anteil an harzigen Krackprodukten des Holzes in Form von dunklen Punkten in der Formmasse (« Schmutzpunkte ») oder in Form von harzigen Belägen auf Metallteilen von Herstell- und Verarbeitungsmaschinen, die mit den schmelzflüssigen erfindungsgemäßen Formmassen in Kontakt stehen, ist zudem erheblich vermindert.

Im folgenden werden einige Ausführungsbeispiele der Erfindung näher beschrieben, wobei sich alle Teile auf Gewichtsteile beziehen.

### Probe 1 (erfindungsgemäß)

60 Teile Polypropylen (MFI = 6,0 g/10 min, 230 °C, 2,16 kg) als Pulver, Korngrößenbereich 100 bis 800 μm

25 Teile Weichholzmehl auf Basis Fichte/Tanne mit einem Feuchtigkeitsgehalt von ca. 3 Gew.%,

3

Korngrößenbereich 60 bis 200 μm

15 Teile Calciumcarbonat mittlere Korngröße 1,5 μm mit 1,5 Gewichtsprozent Stearinsäure, bezogen auf Calciumcarbonat, beschichtet.

### Probe 2 (Vergleichsprobe)

60 Teile Polypropylen (MFI = 6,0 g/10 min, 230 °C, 2,16 kg) als Pulver, Korngrößenbereich 100 bis 800 μm

25 Teile Weichholzmehl auf Basis Fichte/Tanne mit einem Feuchtigkeitsgehalt von ca. 3 Gew.%, Korngrößenbereich 60 bis 200 μm

15 Teile Calciumcarbonat, mittlere Korngröße 1,2 bis 1,4 μm, ohne Stearinsäurebeschichtung.

### Probe 3 (Vergleichsprobe)

60 Teile Polypropylen (MFI = 6,0 g/10 min, 230 °C, 2,16 kg) als Pulver, Korngrößenbereich 100 bis 800 μm

25 Teile Weichholzmehl auf Basis Fichte/Tanne mit einem Feuchtigkeitsgehalt von ca. 3 Gew.%, Korngrößenbereich 60 bis 200 μm

15 Teile Calciumcarbonat, mittlere Korngröße 18 μm, mit 1,2 Gewichtsprozent Stearinsäure, auf Calciumcarbonat bezogen, beschichtet.

### Probe 4 (Vergleichsprobe)

75 Teile Polypropylen (MFI = 6,0 g/10 min, 230 °C, 2,16 kg) als Pulver, Korngrößenbereich 100 bis 800 μm

25 Teile Weichholzmehl auf Basis Fichte/Tanne mit einem Feuchtigkeitsgehalt von ca. 3 Gew.%, Korngrößenbereich 60 bis 200 μm

### Probe 5 (Vergleichsprobe)

73,75 Teile Polypropylen (MFI = 6,0 g/10 min, 230 °C, 2,16 kg) als Pulver, Korngrößenbereich 100 bis 800 μm

25 Teile Weichholzmehl auf Basis Fichte/Tanne mit einem Feuchtigkeitsgehalt von ca. 3 Gew.%, Korngrößenbereich 60 bis 200 μm

1,25 Teile MgO, mittlere Korngröße 1,5 μm.

### Beispiel 1

In einem 2-Schnecken-Kneter vom typ ZSK der Firma Werner & Pfleiderer, Stuttgart, der mit einer Entgasungsvorrichtung kurz vor der Düse ausgerüstet war, wurde eine mechanische Trockenmischung der Komponenten gemäß der Probenzusammensetzung 1 bis 5 zugeführt, das Polymerisat aufgeschmolzen und die Zuschlagstoffe homogen darin dispergiert. Das Temperaturprofil des 2-Schnecken-Kneters war so eingestellt, daß die an der Maschine austretende Temperatur der schmelzflüssigen Mischung einmal ca. 220 °C zum anderen 250 °C betrug. Der Durchsatz lag bei 60 kg Endprodukt pro Stunde, entsprechend einem Durchsatz an Holzmehl von 15 kg/Stunde.

An die Entgasungsvorrichtung wurde ein Unterdruck von 120 mm Quecksilbersäule angelegt und abgesaugtes Kondensat in gekühlten Vorlagen aufgefangen. Das Kondensat bestand aus Wasser und einem nach verbranntem Holz riechenden Öl, im folgenden mit « Pyrolyse-Öl » bezeichnet. Die Menge des « Pyrolyse-Öls » wurde gravimetrisch bestimmt und in Relation zur durchgesetzten Holzmehlmenge gesetzt. Hierbei ergeben sich folgende Werte :

### TABELLE 1

| Probe | Menge in Gew.% an « Pyrolyse-Öl » bezogen auf Holzmehl bei Massetemperaturen von : | |
| --- | --- | --- |
| | 220 °C | 250 °C |
| 1 | 0,15 ⟶ | 0,035 |
| 2 | 0,85 ⟶ | 0,140 |
| 3 | 0,95 ⟶ | 0,120 |
| 4 | 1,15 ⟶ | 0,250 |
| 5 | 0,25 ⟶ | 0,105 |

# 0 018 587

## Beispiel 2

Es wurde wie in Beispiel 1 verfahren, mit dem Unterschied, daß die Temperatur des aus der Maschine austretenden schmelzflüssigen Gemisches einmal 212 °C und einmal 244 °C betrug. Die Gemische wurden unter die Schmelztemperatur des Polypropylens abgekühlt und granuliert. Aus den Granulaten wurden bei 190 °C Platten in den Abmessungen 60 × 60 × 2 mm gepreßt, an denen visuell die Farbe beurteilt und die Anzahl schwarzbrauner « Schmutzpunkte » > 0,2 mm, hervorgerufen durch Krackprodukte des Holzmehls, bestimmt wurde. Ein Teil der Platten wurde gebrochen und die Bruchfläche rasterelektronenmikroskopisch auf Poren, bedingt durch Pyrolysegase des Holzes bei hoher Verarbeitungstemperatur, qualitativ untersucht :

## TABELLE 2

| Probe | Anzahl « Schmutzpunkte » > 0,2 mm | | Farbe : | | Porosität der Formmassen : | |
|---|---|---|---|---|---|---|
| Messtemp. : | 212 °C | 244 °C | 212 °C | 244 °C | 212 °C | 244 °C |
| 1 | 18 | 22 | hellbraun | hellbraun | porenfrei | prakt. Porenfrei |
| 2 | 56 | 98 | hellbraun | mittelbraun | wenig Poren | Poren |
| 3 | 48 | 102 | hellbraun | mittelbraun | wenig Poren | Poren |
| 4 | 76 | 220 | braun | dunkelbraun | wenig Poren | viele Poren |
| 5 | 12 | 51 | braun | braun-dunkelbraun | prakt. Porenfrei | Poren |

## Beispiel 3

Es wurde wie in Beispiel 1 verfahren, wobei das mit 220 °C austretende schmelzflüssige Gemisch in Strängen abgezogen, unter die Schmelztemperatur des Polypropylens abgekühlt und granuliert wurde. Je 20 kg der Granulate gemäß den Proben 1 bis 4 wurden auf einem Einwellenextruder vom Typ Tröster HP 30-20 D, der eine Vorrichtung zum schnellen Auswechseln der Düsenplatte besaß, aufgeschmolzen und bei 230 °C durchgesetzt. Die Düsenplatte vom Durchmesser 40 mm besaß 4 Bohrungen vom Durchmesser 2,5 mm, als Werkstoff diente ein Stahl nach DIN C 15, mit der Werkstoffnummer 1.0401. Für jede Probe wurde eine neue Düsenplatte verwendet. Nach jedem Versuch wurde die Düsenplatte herausgenommen, in Dekalin ausgekocht und ihre Oberfläche anschließend auf Korrosion und festhaftende Pyrolyseprodukte untersucht.

## TABELLE 3

| Probe | Aussehen der Düsenplatte |
|---|---|
| 1 | blank, ohne Veränderung |
| 2 | brauner, fest haftender Belag in Randbereich |
| 3 | schwarzer, fest haftender Belag in Randbereich |
| 4 | schwarzer, fest haftender Belag auf der gesamten Oberfläche |

Wie aus den Beispielen 1 bis 3 ersichtlich, zeichnen sich die erfindungsgemäßen Formmassen durch eine deutlich erhöhte thermische Stabilität aus, was sich durch einen temperaturmäßig breiteren Verarbeitungsspielraum und ein vergleichsweise geringes Auftreten von Pyrolysebestandteilen des eingesetzten Holzmehls bemerkbar macht.

## Ansprüche

1. Formmassen, bestehend aus einem homogenen Gemisch aus
   a) 100 Gewichtsteilen Holzteilchen mit Teilchengrößen von 10 bis 4 000 μm,
   b) 60 bis 400 Gewichtsteilen eines thermoplastischen Olefinpolymerisats mit einem Schmelzindex zwischen 0,1 und 20 g/10 min und einer Dichte zwischen 0,890 und 0,965 g/cm$^3$,
   c) 20 bis 100 Gewichtsteilen eines Calciumcarbonats mit einem Teilchengrößenbereich von 0,01 bis 10 μm, wobei das Calciumcarbonat an der Oberfläche eine fest haftende Schicht aus langkettigen $C_{10}$- bis $C_{40}$-Fettsäuren in Mengen von 0,1 bis 4,0 Gewichtsprozent, bezogen auf das Calciumcarbonat, enthält sowie gegebenenfalls
   d) übliche Zusätze in üblichen Mengen.
2. Formmasse nach Anspruch 1, dadurch gekennzeichnet, daß die Mischungskomponente (A) einen Feuchtigkeitsgehalt > 5 Gewichtsprozent, bezogen auf Holz, aufweist.

5

**0 018 587**

3. Formmassen nach Anspruch 1, dadurch gekennzeichnet, daß die Mischungskomponente (b) aus Carboxylgruppen enthaltenden Olefinpolymerisaten besteht.

4. Formmassen nach Anspruch 1, dadurch gekennzeichnet, daß das Calciumcarbonat der Mischungskomponente (c) an der Oberfläche eine fest haftende Schicht aus Stearinsäure enthält.

5. Verwendung der Formmassen nach Anspruch 1 zur Herstellung geformter Teile.


## Claims

1. A moulding composition consisting of a homogeneous mixture of
   a) 100 parts by weight of wood particles having a size of from 10 to 4 000 $\mu$m,
   b) 60 to 400 parts by weight of a thermoplastic olefin polymer having a melt index of from 0.1 to 20 g/10 min and a density of from 0.890 to 0.965 g/cm$^3$,
   c) 20 to 100 parts by weight of a calcium carbonate having a particle size of from 0.01 to 10 $\mu$m, the calcium carbonate having on its surface a firmly adhering layer of a long-chain fatty acid of 10 to 40 carbon atoms in an amount of from 0.1 to 4.0 % by weight, based on the calcium carbonate, together with, if desired,
   d) conventional additives in the usual amounts.

2. A moulding composition as claimed in claim 1 wherein component (a) has a moisture content of less than 5 % by weight, based on wood.

3. A moulding composition as claimed in claim 1, wherein component (b) consists of a carboxyl-containing olefin polymer.

4. A moulding composition as claimed in claim 1, wherein the calcium carbonate forming component (c) has a firmly adhering layer of stearic acid on its surface.

5. Use of the moulding composition as claimed in claim 1 for the production of moulded parts.


## Revendications

1. Matières à mouler, formées d'un mélange homogène de :
   a) 100 parties en poids de bois en particules aux dimensions comprises entre 10 et 4 000 $\mu$m ;
   b) 60 à 400 parties en poids d'un polymère oléfinique thermoplastique d'une masse volumique entre 0,890 et 0,965 g/cm$^3$ et d'un indice de fusion entre 0,1 et 20 g/10 mn ;
   c) 20 à 100 parties en poids d'un carbonate de calcium d'une granulométrie de 0,01 à 10 $\mu$m, les particules de carbonate étant enrobées d'une couche fortement adhérente d'acides gras à longue chaîne en $C_{10}$ à $C_{40}$ en une proportion de 0,1 à 4,0 % en poids par rapport au carbonate, et éventuellement
   d) d'autres additifs usuels dans des proportions habituelles.

2. Matière à mouler suivant la revendication 1, caractérisée en ce que la composante (a) du mélange possède une teneur en humidité inférieure à 5 % du poids du bois.

3. Matières à mouler suivant la revendication 1, caractérisées en ce que la composante (b) du mélange est constituée de polymères oléfiniques à groupes carboxyle.

4. Matières à mouler suivant la revendication 1, caractérisées en ce que les particules de carbonate de calcium, constituant la composante (c) du mélange, sont enrobées d'une couche fortement adhérente d'acide stéarique.

5. Utilisation de matières à mouler suivant la revendication 1 pour la fabrication de pièces moulées.